# EUROPEAN PATENT APPLICATION

(11) **EP 2 551 649 A1**
(43) Date of publication of application: **30.01.2013**
(21) Application number: 11175543.5
(22) Date of filing: 27.07.2011
(51) Int. Cl.: G01F 3/10

(54) **Improved positive displacement flow meter**

(71) Applicant: Trimec Industries Pty. Ltd., Sydney, NSW 2229 (AU)
(72) Inventor: Luker, Graham James, Sydney, New Wales 2229 (AU)
(74) Representative: Gee, Steven William

(57) **Abstract**

There is a positive displacement flowmeter having a pair of rotors 11 rotatable on spaced apart parallel axis 14 within a housing 8 between inlet and outlet chambers 9, 10. The rotors have gear teeth 18 and are meshed together to rotate in accordance with volumetric fluid flow through the meter from the inlet chamber 9 to the outlet chamber 10. Each of the rotors has three lobes with rotor profiles between adjacent lobes being concave.

## Description

### FIELD OF THE INVENTION

This invention relates to apparatus for flow measurement. More particularly, although not exclusively, it discloses improvements in positive displacement flowmeters.

### BACKGROUND OF THE INVENTION

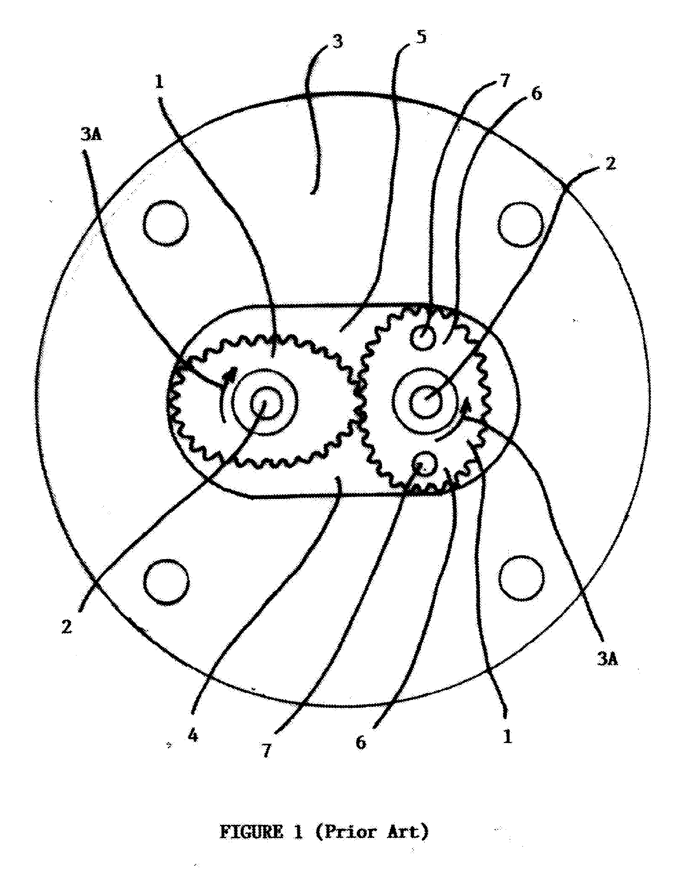

Existing positive displacement flowmeters, as shown for example in figure 1, typically include a pair of oval shaped rotors 1 rotatable on spaced apart parallel axis 2 within a housing 3. The rotors are rotatably offset by 90 degrees and meshed together with straight-cut gears in a critical relationship which causes said rotors to rotate in the direction of arrows 3A as fluid passes through from an inlet chamber 4 to an outlet chamber 5. The speed of rotation of the rotors is related to and indicative of the volume flow through the meter per unit of time. Each oval rotor passes two displacements of fluid per revolution. The lobes 6 on one of the rotors are fitted with magnets 7 which activate an external reed switch, hall effect device or other means (not shown) to generate a signal related to rotor speed and thus fluid volume flow through the meter. Alternatively one of the rotors may be adapted to drive a mechanical register.

Such existing flowmeters have a number of disadvantages however. The oval two lobe design at least in large size flowmeters produces out-of-balance forces which cause vibration, backlash and excessive noise. Existing oval rotor flowmeters also require close manufacturing tolerances to minimise fluid bypass at the mesh point. Any backlash in the rotor gears increases fluid bypass.

### SUMMARY OF THE INVENTION

It is therefore an object of this invention to ameliorate the aforementioned disadvantages and accordingly a positive displacement flowmeter is disclosed which includes at least one pair of rotors rotatable on spaced apart parallel axis within a housing between inlet and outlet chambers and said rotors being meshed together to rotate in accordance with volumetric fluid flow through the meter from said inlet chamber to said outlet chamber wherein each of said rotors has at least three lobes with a rotor profile between adjacent lobes being concave.

Preferably but not essentially each of said rotors has three symmetrically postioned lobes.

It is further preferred that magnets are fitted within the lobes of either or both of said rotors to generate output signals indicative of rotor speed and fluid flow through the meter.

Alternatively one of the rotors may be adapted to drive a mechanical register.

### DETAILED DESCRIPTION OF THE PREFERRED EMBODIMENT

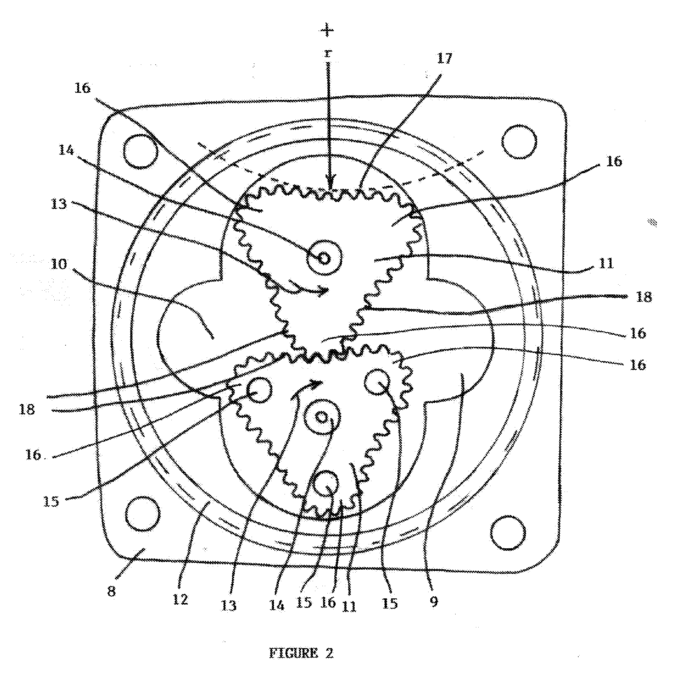

One currently preferred embodiment of the invention will now be described with reference to the attached figure 2 which shows in plan view an open flowmeter housing with meshed rotor assembly according to the invention.

There is a housing 8 from which the cover (not shown) has been removed to show fluid inlet and outlet chambers 9, 10 defined on each side of meshed rotors 11. There is also a fluid seal 12 shown surrounding the chambers. The rotors are rotatably offset by 60 degrees as shown and meshed together in a relationship which causes said rotors to rotate in the direction of arrows 13 about spaced apart parallel axis 14 as fluid passed through the meter from the inlet chamber 9 to the outlet chamber 10. With this embodiment the bottom rotor as shown has implanted magnets 15 which activate an external reed switch, hall effect device or other like means (not shown) to generate signals indicative of rotor speed and thus the volume of fluid flow through the meter.

In accordance with the invention the rotors 11 are each formed with three symmetrical lobes 16 and the rotor profiles 17 between said lobes are concaved as shown for example by radius "r". Although this radius is only shown in relation to one rotor profile for simplicity of illustration, all interlobe profiles on both rotors are similarly concaved. The invention is not limited to any specific degree of concavity as this depends upon the size and design constraints of the flowmeter. One preferred non limiting range of values for the radius "r" however may be between 12 mm and 80 mm.

It has been found during trials by the inventor that with the rotors 11 aligned to mesh as shown such profiles 17 produce an enlarged contact area for the straight-cut gears 18 due to the wrap effect of the concavity. This in turn improves the sealing during backlash between the rotors. In addition the increased number of symmetrical rotor lobes improves balance, reduces vibration and noise and increases the service life of the meter. The passage of three fluid displacements per rotor revolution also reduces noise and vibration.

It will thus be appreciated that this invention at least in the form of the embodiment described provides a novel and improved form of positive displacement flowmeter. Clearly however the example disclosed is only the currently preferred form of the invention and modifications may be made which would be apparent to a person skilled in the art. For example the design of the flowmeter housing, the shape and configuration of the rotors, the number of lobes on each rotor and the degree of concavity in the rotor profile may all be changed following further development work by the inventor.

## Claims

1. A positive displacement flowmeter having at least one pair of rotors rotatable on spaced apart parallel axis within a housing between inlet and outlet chambers and said rotors having teeth and being meshed together to rotate in accordance with volumetric fluid flow through the meter from said inlet chamber to said outlet chamber wherein each of said rotors has at least three lobes with rotor profiles between adjacent lobes being concave.

2. The positive displacement flowmeter as claimed in claim 1 wherein each of said rotors has three symmetrically positioned lobes.

3. The positive displacement flowmeter as claimed in claim 1 wherein magnets are fitted within the lobes of either one or both of said rotors to generate output signals indicative of rotor speed and volumetric-fluid flow through the meter,

4. The positive displacement flowmeter as claimed in claim 3 wherein said magnets are adapted to activate an external reed switch, hall effect device or mechanical register.

5. The positive displacement flowmeter as claimed in claim 1 wherein said flowmeter includes two rotors rotatably offset by 60 degrees.

6. The positive displacement flowmeter as claimed in claim 1 wherein said concave rotor profiles are defined by a radius of curvature.

7. The positive displacement flowmeter as claimed in claim 6 wherein said radius of curvature is in the range of 12 mm to 80 mm.

8. The positive displacement flowmeter as claimed in claim 6 wherein said radius of curvature is the same for all rotors.

9. The positive displacement flowmeter as claimed in claim 7 wherein said radius of curvature is chosen for a given rotor configuration to maximise gear contact and improve sealing during backlash between said rotors.

10. A rotor for a positive displacement flowmeter, said rotor having at least three lobes with rotor profiles between adjacent lobes being concave and defined by a radius of curvature.
